Europäisches Patentamt

European Patent Office

Office européen des brevets

(11) Veröffentlichungsnummer: **0 218 153**
**A2**

## (12) EUROPÄISCHE PATENTANMELDUNG

(21) Anmeldenummer: 86113252.0

(51) Int. Cl.⁴: **B01D 53/36 , C01B 17/16**

(22) Anmeldetag: 26.09.86

(30) Priorität: 28.09.85 DE 3534741

(43) Veröffentlichungstag der Anmeldung:
15.04.87 Patentblatt 87/16

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Eichhorn, Hans-Dieter, Dr.**
**Buchnerstrasse 13**
**D-6700 Ludwigshafen(DE)**
Erfinder: **Lebert, Ulrich, Dr.**
**In den Rausenaeckern 10**
**D-6719 Hettenleidelheim(DE)**
Erfinder: **Mross, Wolf Dieter, Dr.**
**Anselm-Feuerbach-Strasse 21**
**D-6710 Frankenthal(DE)**
Erfinder: **Schachner, Helmut, Dr.**
**Zum Gruenshof 6**
**D-6909 Walldorf(DE)**
Erfinder: **Schwarzmann, Matthias, Dr.**
**Carl-Bosch-Strasse 54**
**D-6703 Limburgerhof(DE)**

(54) **Verfahren zur Entfernung von Schwefelverbindungen aus Gasströmen.**

(57) Die Anmeldung betrifft ein Verfahren zur Entfernung von in Gasströmen enthaltenen Schwefelverbindungen, insbesondere COS und/oder $CS_2$ durch Hydrolyse, dadurch, daß man Schwefelverbindungen an einem geformten Aluminiumoxid und Titandioxid enthaltenden Katalysator mit Wasser und/oder Wasserdampf zu Schwefelwasserstoff umsetzt.

EP 0 218 153 A2

## Verfahren zur Entfernung von Schwefelverbindungen aus Gasströmen

Es ist bekannt, Synthesegase, die durch Dampfreformieren, durch Kohle-bzw. Rückstandsvergasung oder durch partielle Oxidation von Kohlenwasserstoffen gewonnen werden, in mehreren Verfahrensstufen für die Synthesen zu reinigen und dabei u.a. die Schwefelverbindungen, die hauptsächlich in Form von Schwefelwasserstoff und organischen Schwefelverbindungen vorliegen, zu entfernen. Das Kernproblem ist hierbei die Entfernung der organischen Schwefelverbindungen, von denen die wichtigste Kohlenstoffoxisulfid und Schwefelkohlenstoff darstellen. Für die Entfernung von Schwefelwasserstoff gibt es eine Reihe von Verfahren, z.B. Wäschen, die jedoch den größten Teil des organischen Schwefels, z.B. als Kohlenstoffoxisulfid nicht erfassen. Es wurde deshalb versucht, den in den organischen Schwefelverbindungen enthaltenen Schwefel durch katalytische Verfahren in Schwefelwasserstoff überzuführen und diesen anschließend nach den üblichen Verfahren zu entfernen.

Als Katalysatoren hat man für diese Verfahren Bauxite oder aktivierte Formen des Aluminiumoxids in der Technik verwendet (Fiedorow et al, J. Catal. 85, 339 -348, 1984). Kohlenstoffoxisulfid wird mit Wasserdampf zu Schwefelwasserstoff und Kohlendioxid umgesetzt.

Es sind auch Katalysatoren bekannt, die ein oder mehrere Metalle der Gruppe IVa und VIII des PSE, insbesondere Molybdän, Wolfram, Eisen, Nickel, Kobalt oder Kombinationen dieser Metalle wie Kobalt-Molybdän, Kobalt-Wolfram, Nickel-Wolfram, Nickel-Molybdän, in Mengen von 1 bis 20 Gew.% enthalten, (DE-OS 22 03 494). Im allgemeinen werden diese Metalle in ihrer sulfidischen Form verwendet.

An diesen Katalysatoren setzt sich z.B. Kohlenstoffoxisulfid zu Schwefelwasserstoff und Kohlenmonoxid um.

Man hat diese Katalysatoren auch schon zusätzlich mit Alkaliphosphaten, z.B. $K_3PO_4$ oder Alkaliionen, z.B. Natrium oder Kalium, dotiert.

Schwierigkeiten ergeben sich nach längeren Betriebszeiten durch Zerfall der verwendeten Katalysatorteilchen. Dies macht sich insofern bemerkbar, daß die durch den Zerfall entstehenden kleineren Katalysatorteilchen dem durchströmenden Gas einen höheren Widerstand entgegensetzen als die ursprünglich größer dimensionierten Teilchen, so daß ein höheres Druckgefälle zwischen dem Reaktoreingang und dem Reaktorausgang überwunden werden muß. Da aber diese Druckdifferenz begrenzt ist, muß schließlich der Gasdurchfluß herabgesetzt werden, was zu einer Leistungsverminderung führt, so daß der Katalysator unter hohen Kosten ausgewechselt bzw. erneuert werden muß.

Da der Druckverlust der bekannten Katalysatoren ohnehin schon relativ hoch ist, genügt schon der Zerfall von verhältnismäßig wenigen Pellets, um den Druckverlust auf ein zu hohes Maß ansteigen zu lassen, der dann ein Wechsel der Katalysatorschüttung nötig macht.

Der vorliegenden Erfindung liegt somit die Aufgabe zugrunde, diese Nachteile zu überwinden und ein neues Verfahren zur Entfernung von Schwefelverbindungen, besonders Kohlenstoffoxisulfid, durch Umsetzung zu Schwefelwasserstoff, zur Verfügung zu stellen, welches über lange Zeit mit verbesserter Katalysatorstandzeit und niedrigem Druckverlust über dem Reaktor betrieben werden kann.

Überraschenderweise wurde nun gefunden, daß man bei einem Verfahren zur Entfernung von in Gasströmen enthaltenen Schwefelverbindungen, insbesondere COS und/oder $CS_2$ durch Hydrolyse ohne Nachteil für die Aktivität die Standzeit bzw. die Stabilität geformter Katalysatoren beträchtlich erhöht, wenn man die Schwefelverbindungen an einem Aluminiumoxid und Titandioxid enthaltenden Katalysator mit Wasser und/oder Wasserdampf zu Schwefelwasserstoff umsetzt.

Vorzugsweise wird das erfindungsgemäße Verfahren angewendet um Gasströme zu reinigen, die 1 bis 10.000 ppm, insbesondere 10 bis 1.000 ppm COS und/oder $CS_2$ enthalten. Vorteilhaft wird das Verfahren bei Gasströmen angewendet, die durch Dampfreformieren von Kohlenwasserstoffen, durch Kohle-bzw. Rückstandsvergasung oder durch partielle Oxidation von Kohlenwasserstoffen gewonnen werden, neben Wasserdampf und den Schwefelverbindungen mindestens eine der Komponenten Stickstoff, Methan, Kohlenmonoxid, Kohlendioxid oder Wasserdampf enthalten.

Eine zweckmäßige Ausführungsform besteht darin, daß man den Gasstrom durch ein Festbett leitet, welches den geformten Katalysator enthält, der aus aktivierter Tonerde, vorzugsweise γ-Aluminiumoxid mit einem Gehalt von 1 bis 90 Gew.%, vorzugsweise 6 bis 80 Gew.%, Titandioxid, vorzugsweise in Form von Anatas, besteht. Im Titandioxid kann zusätzlich Phosphor mit einem Gehalt bis zu 1 Gew.%, vorzugsweise 0,01 bis 0,3 Gew.%, bezogen auf das Titandioxid, enthalten sein. Bevorzugte Formen für den Katalysator sind solche, die dem durchströmenden Gas wenig Widerstand entgegensetzen, wie z.B. Ringe, Sterne, Ringe mit Zwischenwänden, Kugeln, Zylinder sowie Wabenkörper.

Bei Bedarf kann der Katalysator zusätzlich Alkalimetallionen enthalten. Diese können beispielsweise mit einer Lösung, z.B. in Form einer wäßrigen Natriumhydroxidlösung, auf den Katalysator aufgebracht werden. Der Gehalt an Alkalimetallionen kann bis zu 5 Gew.%, vorzugsweise bis zu 1,5 Gew.%, bezogen auf den fertigen Katalysator, betragen.

Mit dem erfindungsgemäßen Verfahren kann man z.B. Gasströme behandeln, die durch Dampfreformieren von Kohlenwasserstoffen, durch partielle Oxidation von Kohlenwasserstoffen oder durch Kohle-und Rückstandsvergasung gewonnen werden. Solche Gase enthalten in wechselnden Anteilen eine oder mehrere der Komponenten Wasserdampf, Stickstoff, Sauerstoff, Methan, Kohlenmonoxid, Kohlendioxid, Wasserstoff und als Verunreinigungen Schwefelverbindungen, wie Kohlenstoffoxisulfid (COS) oder Kohlenstoffdisulfid ($CS_2$), die erfindungsgemäß zu Schwefelwasserstoff umgesetzt werden. Der Anteil dieser Schwefelverbindungen ist wechselnd und hängt im allgemeinen von den Ausgangsstoffen der Vergasung, z.B. vom Schwefelgehalt des zu vergasenden Rückstandes oder der zu vergasenden Kohle ab. Im allgemeinen enthalten die Gase 0,01 bis 0,3 Vol.% Kohlenstoffoxisulfid und 0,01 bis 0,3 Vol.% Kohlenstoffdisulfid. Es können von Fall zu Fall jedoch auch höhere oder niedrigere Konzentrationen auftreten. Das neue Verfahren ist nicht nur auf Gase der oben erwähnten Herkunft anwendbar, sondern auch zur Behandlung von Gasströmen anderer Herkunft geeignet, die Schwefelverbindungen, z.B. COS und/oder $CS_2$, sowie organische Schwefelverbindungen enthalten.

Diese Schwefelverbindungen werden erfindungsgemäß an einem geformten, titandioxid-enthaltendem Tonerde-Katalysator mit Wasserdampf umgesetzt, wobei aus Kohlenstoffoxisulfid Schwefelwasserstoff und Kohlendioxid gebildet wird.

Die Umwandlung des Kohlenstoffoxisulfids soll im allgemeinen soweit erfolgen, daß weniger als 0,5 Teile COS pro eine Million Teile Gas im Gasstrom (ppm) verbleiben. Der Verfahrensdruck ist im allgemeinen nicht kritisch und richtet sich in der Regel nach den Bedingungen, bei denen das Gas anfällt und kann z.B. im Bereich zwischen 1 und 100 bar, aber auch bei höheren Drücken, liegen. Die Raumgeschwindigkeit (Volumen der zugeführten Gasmenge pro Stunde geteilt durch das Katalysatorschüttvolumen) hängt vom Gehalt des behandelten Gasstromes an Schwefelverbindungen, bevorzugt COS und/oder $CS_2$, ab und liegt im allgemeinen zwischen 100 und 10.000.

Es hat sich gezeigt, daß man ab einer Temperatur von 150°C bei den üblicherweise verwendeten Raumgeschwindigkeiten dem Gleichgewicht der Umsetzung recht nahekommt. Die Restkonzentration an COS richtet sich deshalb in erster Linie nach dem Gleichgewicht, welches durch die Temperatur sowie dem Dampf/$CO_2$-Verhältnis im Gas bestimmt wird. Es kann sich von Fall zu Fall als vorteilhaft erweisen, dem Gas vor der Umsetzung zusätzlich Wasserdampf zuzuführen. Der Temperaturbereich für die Umsetzung richtet sich nach den spezifischen Gegebenheiten, z.B. nach der COS-Konzentration oder dem Dampf/$CO_2$-Verhältnis und kann deshalb in weiten Bereichen, z.B. zwischen 120 bis 400°C, variiert werden.

Bei dem erfindungsgemäßen Verfahren, in Gegenwart von geformten Katalysatoren, die Titandioxid, vorzugsweise in Form von Anatas, und Tonerde enthalten, ist der Druckverlust über der Katalysatorschüttung niedriger sowie aufgrund des stabileren Druckverlustes die Standzeit des Katalysators wesentlich höher als bei der Verwendung von Bauxit-bzw. Tonerde-Katalysatoren allein, bei denen insbesondere bei höheren Wasserdampfpartialdrücken Probleme durch Anstieg der Druckverluste auftreten.

Für das Verfahren wird ein Katalysator verwendet, der aus aktivierter Tonerde, vorzugsweise γ-Aluminiumoxid mit einem Gehalt von 1 bis 90 Gew.%, vorzugsweise 6 bis 80 Gew.%, Titandioxid, bezogen auf die Katalysatorgesamtmasse, besteht. Vorteilhaft wird γ-Aluminiumoxid mit einer BET-Oberfläche von mehr als 50 m²/g, vorzugsweise von 100 bis 350 m²/g und als Titandioxid Anatas mit einer BET-Oberfläche von mindestens 50 m²/g, vorzugsweise von 100 bis 300 m²/g, verwendet. Ein weiterer Vorteil ist, daß man diese Katalysatoren wesentlich einfacher in solche Formen bringen kann, die dem durchströmenden Gasstrom bei möglichst hoher geometrischer Oberfläche wesentlich weniger Widerstand entgegensetzen, als die herkömmlichen Strangformen und Kugelformen. Besonders bevorzugt sind als Formen Ringe, Ringe mit Zwischenwänden, sternartige Formen oder Wabenkörper.

Die Abmessungen für Ringe können im Bereich von 3 bis 20 mm für den Außendurchmesser, einer Höhe von 3 bis 20 mm und einem Innendurchmesser von 2 bis 16 mm liegen. Die Anfertigung der Teilchen ist nicht auf diese Maße beschränkt, falls gewünscht können auch größere Ringe verwendet werden.

Zur Erhöhung der Festigkeit der Ringe bzw. zur Erhöhung der geometrischen Oberfläche der Ringe können im Ring noch drei oder mehr Zwischenwände vorhanden sein, beispielsweise drei Trennwände, die in diametralen, zueinander senkrechten Ebenen angeordnet sind und zwischeneinander etwa gleiche Winkel bilden. Enthält der Ring vier zueinander senkrechte Trennwände, werden sie im Querschnitt ein Kreuz bilden. Die Zylinder können auch mehr Trennwände enthalten, wobei diese ebenfalls vorzugsweise gleiche Winkel zwischeneinander bilden.

Werden Wabenkörper eingesetzt, können verschiedene Wabenformen verwendet werden. Die Grundfläche kann deshalb z.B. kreisförmig, oval oder polygonal sein. Die Länge kann ein Vielfaches des Querschnittes erreichen und kann sich u.a. nach anderen Gegebenheiten, z.B. dem verwendeten Reaktor richten. Die Körper sind von einer Vielzahl parallel verlaufender Kanäle durchzogen, deren Grundfläche ebenfalls kreisförmig, oval, geschwungen oder eckig sein kann. Entscheidend für einen niedrigen Druckverlust ist der freie Querschnitt der Anströmfläche, der über 40 % erreichen soll. Die Festigkeit der Wabenkörper limitiert letzlich den freien Querschnitt.

Das neue Verfahren ist jedoch nicht auf die Anwendung der Katalysatoren in den oben genannten Formen beschränkt. Man kann auch die herkömmlichen Formen, wie Stränge oder Kugeln anwenden. In diesem Falle sollen die Kugeln einen Durchmesser zwischen 2 und 10 mm, bevorzugt zwischen 3 und 7 mm aufweisen. Der Außendurchmesser bzw. die Länge von Strängen kann wie üblich im Bereich von 3 bis 20 mm liegen.

Bei der Herstellung des Katalysators geht man zweckmäßig von einem Ausgangsstoff aus, bei dem Aluminiumoxid bzw. Aluminiumoxidhydrat und Titandioxid in Form von Anatas bzw. Titanoxidhydrat im gewünschten Verhältnis vorliegen. Dieser Ausgangsstoff kann auf verschiedenen Wegen hergestellt werden. So kann beispielsweise Aluminiumoxidmonohydrat (Böhmit) in entsprechendem Verhältnis mit Titanoxidhydrat gemischt und gegebenenfalls nach einer Temperaturbehandlung zum gewünschten Formkörper verarbeitet werden.

Als Titanoxidhydrat kann beispielsweise ein Produkt verwendet werden, wie es beim Schwefelsäureaufschluß von Ilmenit ($FeTiO_3$) anfällt. Dieses Produkt kann gegebenenfalls vor dem Vermischen mit dem Aluminiumoxidmonohydrat noch einer Temperaturbehandlung unterzogen werden. Weiterhin kann das Titanoxidhydrat gegebenenfalls Phosphor enthalten. Der Anteil von Phosphor kann bis zu 1 Gew.% betragen, vorzugsweise zwischen 0,01 bis 0,30 Gew.% Phosphor, bezogen auf das Titandioxid.

Eine andere Ausführungsform zur Herstellung des Katalysatorausgangsstoffes besteht darin, eine wäßrige oder eine alkoholische Suspension des oben beschriebenen Titanoxidhydrats herzustellen und darin Aluminiumsalze, z.B. Aluminiumnitrat, in einer gewünschten Menge zu lösen und diese Lösung z.B. mit einer Ammoniumhydroxidlösung oder einer Alkalilösung, z.B. eine Lösung von $Na_2CO_3$, zu behandeln, bis Aluminiumoxidhydrat ausfällt. Der Niederschlag aus Titanoxidhydrat und Aluminiumoxidhydrat kann anschließend abfiltriert, von Fremddionen freigewaschen werden und danach durch Temperaturbehandlung getrocknet werden.

Gemäß einer anderen Ausführungsform wird zu einer wäßrigen Suspension von Aluminiumoxid bzw. Aluminiumoxidhydrat in der gewünschten Menge eine Lösung von Titantetrachlorid, Titanylsulfat oder eines Titanalkoholats, z.B. Titanmethylat, gegeben und mit Ammoniumhydroxidlösung oder Alkalilösung versetzt, bis sich in Form eines weißen Niederschlags Titanoxidhydrat abscheidet. Gegebenenfalls kann man die titanhaltige Lösung vor dem Ausfällen mit einer löslichen Phosphorverbindung, z.B. Phosphorsäure oder Ammoniumdihydrogenphosphat u.a. in der Menge zu versetzen, daß Phosphor, bezogen auf Titandioxid, in einem Anteil von 0 bis 1 Gew.%, vorzugsweise zwischen 0,01 und 0,3 Gew.% vorliegt. Nach dem Fällen wird der Niederschlag aus Titanoxidhydrat und dem vorgelegten Aluminiumoxid bzw. Aluminiumoxidhydrat abfiltriert, von Fremddionen freigewaschen und danach durch Temperaturbehandlung getrocknet.

In einer weiteren Ausführungsform wird beispielsweise eine Lösung von Aluminiumsalzen, z.B. Aluminiumnitrat, mit einer Lösung von Titantetrachlorid, Titanylsulfat oder ein Titanalkoholat, z.B. Titanmethylat vereinigt und mit Ammoniumhydroxidlösung oder eine Alkalilösung, z.B. $Na_2CO_3$-Lösung, versetzt, bis sich ein Niederschlag abscheidet. Der titanhaltigen Lösung kann man auch hier eine lösliche Phosphorverbindung, z.B. Phosphorsäure oder Ammoniumdihydrogenphosphat in der Menge zusetzen, daß Phosphor, bezogen auf Titandioxid, in einem Anteil bis zu 1 Gew.%, vorzugsweise zwischen 0,01 und 0,5 Gew.%, vorliegt. Nach dem Fällen wird der Niederschlag aus Titanoxidhydrat und Aluminiumoxidhydrat abfiltriert, von Fremddionen freigewaschen und danach durch Temperaturbehandlung getrocknet.

Nach dem Trocknen des auf den verschiedenen, oben beschriebenen Wegen erhaltenen Katalysatorausgangsstoffes, z.B. im Bereich von Raumtemperatur bis etwa 200°C erfolgt die Verformung dieser Katalysatormasse zu den gewünschten Formkörpern.

Die Verformung kann nach verschiedenen, bekannten Verfahren, wie Extrudieren, Tablettieren und Granulieren erfolgen. Rohrförmige Formkörper, wie Ringe, kann man bevorzugt durch Extrudieren oder Tablettieren, Ringe mit Zwischenwänden durch Extrudieren, kugelförmige Formkörper durch Granulieren oder gegebenenfalls durch Tablettieren, Wabenkörper durch Extrudieren, herstellen.

Bei der Herstellung von Formkörpern durch Extrudierverfahren kann der entsprechende Ausgangsstoff in der Regel mit Wasser, gegebenenfalls unter Zusatz von Alkalilauge sowie unter Zusatz von Extrudierhilfsmitteln wie Stärke, Methylcellulose, Graphit, Polyethylenglykole, Polyvinylalkohole, Polyvinylpyrrolidone, Polyacrylester, Stearinsäure und deren Metallsalze, Naphthalin, Ammoniak, Ameisensäure, Oxalsäure, Salpetersäure etc. entweder als einem porositätsverbessernden Mittel oder als Gleitmittel oder als Peptisierungsmittel verformt oder zunächst geknetet und anschließend verformt werden; bevorzugt ist dabei die Knetung und die anschließende Verformung, insbesondere das Extrudieren. Die bei der Extrusion erhaltenen Formlinge kann man zunächst bei Temperaturen im Bereich von Raumtemperatur bis 200°C trocknen und danach bei Temperaturen bis zu 600°C kalzinieren, wobei auch eine stufenweise Vorkalzination von Vorteil sein kann.

Bei der Herstellung von Formkörpern durch Tablettierverfahren können ein oder mehrere Zusätze, z.B. Bindemittel und/oder Schmiermittel (Gleitmittel) verwendet werden. Als Zusätze sind z.B. Graphit, Stearinsäure und deren Metallsalze, Talkum, Methylcellulose bzw. andere modifizierte Cellulosen, Glycerinmonostearat, Polyethylenglykole, Polyvinylalkohole, Polyvinylpyrrolidone und Polyacrylester geeignet.

Bei der Herstellung von Formkörpern durch Granulieren kann man ebenfalls die üblichen Granulierhilfsmittel verwenden.

Nach der Formgebung schließt sich zweckmäßigerweise eine Temperaturbehandlung der erhaltenen Formkörper an. Die Formkörper kann man bei Temperaturen im Bereich von Raum- temperatur bis etwa 200°C trocknen und danach bei Temperaturen im Bereich von 300 bis 600°C kalzinieren, wobei auch eine stufenweise Vorkalzination von Vorteil sein kann.

In den nachfolgenden Beispielen soll die Erfindung näher erläutert werden:

## Beispiel 1

Ein beim Schwefelsäureaufschluß von Ilmenit - (FeTiO₃) anfallendes Titanoxidhydrat wird bei Temperaturen zwischen 120 und 160°C getrocknet. 300 g des getrockneten Titanoxids mit einem Glühverlust von 19,2 Gew.% (2 Stunden bei 900°C) und eine BET-Oberfläche von 215 m²/g wird mit 700 g Aluminiumoxidmonohydrat - (Böhmit), welches einen Glühverlust von 24,8 Gew.% (2 Stunden bei 900°C) aufweist, trocken vermischt. Die Mischung wird unter Zusatz von 420 cm³ einer 1 %igen wäßrigen Lösung von Salpetersäure ca. 1 Stunde geknetet und die Knetmasse zu 6 mm Strängen verpreßt. Die feuchten Stränge werden zunächst 12 Stunden bei Raumtemperatur, dann 2 Stunden bei 130°C getrocknet und anschließend 3 Stunden bei 500°C kalziniert. Die Stränge weisen einen Glühverlust von 1,2 Gew.% (2 Stunden bei 900°C), eine BET-Oberfläche von 205 m²/g und eine Druckfestigkeit von 8,2 kg auf. Die Stränge setzen sich aus 31,5 Gew.% TiO₂ und 68,5 Gew.% Al₂O₃ (bez. auf 0 % Glühverlust) zusammen.

## Beispiel 2

In einer Lösung von 1,47 kg Al(NO₃)₃ ꞏ 5 H₂O in 3 l Wasser werden 700 g Titanoxidhydrat suspendiert und diese Lösung mit NH₄OH-Lösung versetzt bis sich ein pH-Wert von 6,8 einstellt. Der Feststoff aus Suspension und dem entstandenen Niederschlag wird nach beendeter Fällung noch 15 Minuten nachgerührt, anschließend abfiltriert und gewaschen. Das gewaschene Produkt wird 12 Stunden bei Raumtemperatur und danach 2 Stunden bei 130°C getrocknet. 5.000 g dieses Produktes werden dann mit 160 g Kartoffelstärke vermischt, mit Wasser angemaischt und im Kneter 1 Stunde verdichtet. Die plastische Masse wird zu Wabenkörpern extrudiert. Die quatratische Grundfläche des erhaltenen quaderförmigen Körpers hat 5 cm Kantenlänge. Die Länge des Quaders selbst beträgt 25 cm. Die 36 inneren Kanäle haben eine quadratische Stirnfläche mit 6 mm dichte Kantenlänge. Die Stärke der inneren Trennwände beträgt 1,5 mm.

Die Wabenkörper werden 3 Tage bei Raumtemperatur und danach bei ansteigender Temperatur bis 150°C 4 Stunden getrocknet. Danach werden die Formkörper 3 Stunden bei 500°C kalziniert. Die spezifische Oberfläche des Formkörpers beträgt 180 m²/g und weist einen Glühverlust von 3,2 Gew.% (2 Stunden bei 900°C) auf. Der Formkörper setzt sich aus 71,5 Gew.% TiO₂ und 28,5 Gew.% Al₂O₃ (bezogen auf 0 % Glühverlust) zusammen.

## Beispiel 3

In einer Suspension von 700 g Aluminiumoxidhydrat (Böhmit) in 1 l Wasser werden 0,215 g NH₄H₂PO₄ gelöst und die Suspension anschließend mit einer Lösung von 80 g TiCl₄ in 600 cm³ Wasser versetzt. Anschließend wird NH₄OH-Lösung zugegeben, bis sich ein pH-Wert von 8,6 einstellt. Der Feststoff aus erhaltenem Niederschlag wird nach 15minütigem Nachrühren abfiltriert und gewaschen. Das gewaschene Produkt wird 12 Stunden bei Raumtemperatur und danach 2 Stunden bei

130°C getrocknet. Es setzt sich aus 6,009 % TiO₂, 93,981 % Al₂O₃ und 0,01 % P (bezogen auf O % Glühverlust) zusammen. Das getrocknete Produkt wird anschließend mit 2 % Magnesiumstearat versetzt und zu Ringtabletten mit den Maßen 5 mm Höhe, 5 mm Außendurchmesser und 1,5 mm Wandstärke verpreßt. Die erhaltenen Ringtabletten werden anschließend 3 Stunden bei 500°C kalziniert. Die Formkörper weisen einen Glühverlust von 0,9 Gew.%%nd eine BET-Oberfläche von 211 m²/g auf.

Beispiel 4

Eine Lösung von 3,7 kg Al(NO₃)₃ × 9 H₂O und 0,78 g NH₄H₂PO₄ werden mit einer Lösung von 330 g TiCl₄ in 2,5 l Wasser versetzt. Anschließend wird NH₄OH-Lösung zugegeben, bis sich ein pH-Wert von 8,0 einstellt. Der erhaltene Niederschlag wird nach 15minütigem Nachrühren abfiltriert und gewaschen. Das gewaschene Produkt wird 12 Stunden bei Raumtemperatur und 3 Stunden bei 130°C getrocknet. Der getrocknete und gewaschene Niederschlag wird unter Zusatz von Wasser und Ameisensäure angemaischt und im Kneter 1 Stunde verdichtet. Die plastische Masse wird zu Wabenkörpern mit den Abmessungen entsprechend Beispiel 2 extrudiert. Die Wabenkörper werden 3 Tage bei Raumtemperatur und danach bei ansteigender Temperatur bis 150°C 4 Stunden getrocknet. Anschließend werden die Formkörper 3 Stunden bei 500°C kalziniert. Die spezifische Oberfläche beträgt 196 m²/g, der Glühverlust 2,4 Gew.%. Der Formkörper setzt sich aus (bezogen auf den Glühverlust O %) 19,6 Gew.%TiO₂, 0,03 Gew.% Phosphor und 80,37 Gew.% Al₂O₃ zusammen.

Vergleichsbeispiel A

Zum Vergleich wird in bekannter Weise ein Aluminiumoxidmonohydrat (Böhmit) mit 2 % Stearinsäure vermischt und zu Tabletten mit 5 mm Höhe und 5 mm Durchmesser verpreßt. Die erhaltenen Tabletten werden 3 Stunden bei 550°C kalziniert, sie weisen eine Oberfläche von 239 m²/g auf.

Vergleichsbeispiel B

Aluminiumoxidmonohydrat (Böhmit) wird unter Zusatz von geringen Mengen Salpetersäure zu kugelförmigen Formkörpern mit einem Durchmesser von 3 bis 5 mm pelletiert. Diese Formkörper werden zunächst bei 200°C getrocknet und dann 3 Stunden bei 500°C kalziniert. Die Oberfläche der Formkörper beträgt 228 m²/g.

Aktivitätstest

Zur Bestimmung der katalytischen Aktivität werden je 20 cm³ Split der Korngröße 1 bis 1,5 mm der Beispiele 1 bis 4 sowie der Katalysatoren nach dem Stand der Technik in einen Edelstahlreaktor mit 10 mm Innendurch messer gefüllt und bei einem Druck von einem bar und einer Temperatur von 250°C stündlich mit 20 l Gas beaufschlagt, welches etwa aus 70 % Wasserdampf und 30 % Wasserstoff besteht. Zusätzlich enthält das Gas etwa 1.000 ppm COS. Nach Verlassen des Reaktors ist das Gas bei allen Katalysatoren praktisch frei von COS.

Standzeittest

Je 200 cm³ der nach Beispiel 1 und 3 hergestellten Katalysatoren sowie die Katalysatoren nach dem Stand der Technik werden in einen Edelstahlreaktor von 24 mm Innendurchmesser gefüllt und bei einem Druck von 35 bar und einer Temperatur von 300°C pro Stunde mit 200 l Gasgemisch - (bezogen auf Normbedingungen) aus Wasserstoff und Wasserdampf beaufschlagt. Der Wasserdampfpartialdruck im Gasgemisch beträgt 25 bar, der Wasserstoffpartialdruck 10 bar.

Zum Test der nach Beispiel 2 und 4 hergestellten Wabenkörper werden je 2 Körper in einen Reaktor gefüllt, dessen Geometrie dem Formkörper angepaßt ist und entsprechend den obigen Bedingungen mit Gas beaufschlagt.

Nach Testzeiten von etwa 500 bis 800 Stunden werden die Versuche abgebrochen und die ausgebauten Katalysatorproben bezüglich Phasenzusammensetzung, BET-Oberfläche und Härte untersucht.

Die Ergebnisse der nachfolgenden Tabelle zeigen, daß bei Verwendung von Katalysatoren nach dem Stand der Technik (Vergleichsbeispiele A und B) schlechtere Ergebnisse erzielt werden, als bei Verwendung der erfindungsgemäß hergestellten Katalysatoren (Beispiele 1 bis 4). Die Katalysatoren nach Vergleichsbeispiel A und B zeigen sowohl eine schnellere Abnahme der BET-Oberfläche und der Härte als auch eine schnellere Phasenumwandlung im Vergleich zu den erfindungsgemäß hergestellten Katalysatoren.

| Katalysator | Testzeit Stunden | Phasenzusammensetzung (Guinier-Aufnahme) | BET-Oberfläche $m^2/g$ | Druckfestigkeit |
|---|---|---|---|---|
| Beispiel 1 (erfindungs-gemäß) | 0 | $\gamma$-Al$_2$O$_3$, Anatas | 205 | 8,2 kg |
|  | 500 | " | 187 | 8,0 kg |
|  | 800 | " | 174 | 7,5 kg |
| Beispiel 2 (erfindungs-gemäß) | 0 | $\delta$-Al$_2$O$_3$ (schwache Reflexe), Anatas | 180 | 32 kg/cm$^2$) in |
|  | 500 | " | 173 | 29 kg/cm$^2$) Richtung |
|  | 800 | " | 155 | 29 kg/cm$^2$) der Kanäle |
| Beispiel 3 (erfindungs-gemäß) | 0 | $\delta$-Al$_2$O$_3$, Anatas | 211 | 858 kg/cm$^2$ |
|  | 500 | " | 189 | 842 kg/cm$^2$ |
|  | 800 | $\delta$-Al$_2$O$_3$, Böhmit, Anatas | 171 | 794 kg/cm$^2$ |
| Beispiel 4 (erfindungs-gemäß) | 0 | $\gamma$-Al$_2$O$_3$, Anatas | 196 | 30 kg/cm$^2$) in |
|  | 500 | " | 179 | 27 kg/cm$^2$) Richtung |
|  | 800 | " | 164 | 25 kg/cm$^2$) der Kanäle |
| Vergleichs-beispiel A (nach Stand der Technik) | 0 | $\delta$-Al$_2$O$_3$, | 239 | 915 kg/cm$^2$ |
|  | 500 | $\gamma$-Al$_2$O$_3$, Böhmit | 148 | 127 kg/cm$^2$ |
|  | 800 | $\alpha$-Al$_2$O$_3$, $\delta$-Al$_2$O$_3$ | 82 | 31 kg/cm$^2$ |
| Vergleichs-beispiel B (nach Stand der Technik | 0 | $\gamma$-Al$_2$O$_3$ (schwache Reflexe) | 228 | 7,5 kg |
|  | 500 | $\alpha$-Al$_2$O$_3$, $\gamma$-Al$_2$O$_3$, Böhmit | 137 | 0,8 kg |
|  | 800 | " | 46 | 0,0 kg |

## Ansprüche

1. Verfahren zur Entfernung von in Gasströmen enthaltenen Schwefelverbindungen, insbesondere COS und/oder $CS_2$ durch Hydrolyse, dadurch gekennzeichnet, daß man Schwefelverbindungen an einem geformten Aluminiumoxid und Titandioxid enthaltenden Katalysator mit Wasser und/oder Wasserdampf zu Schwefelwasserstoff umsetzt.

2. Verfahren nach Anspruch 1, dadurch gekennzeichnet, daß die Gasströme Kohlenstoffoxisulfid und/oder Kohlenstoffdisulfid in Konzentrationen von 1 bis 10.000 ppm, vorzugsweise von 10 bis 1.000 ppm enthalten.

3. Verfahren nach Anspruch 1 und 2, dadurch gekennzeichnet, daß man COS und/oder $CS_2$ aus Gasströmen entfernt, die durch Dampfreformieren von Kohlenwasserstoffen, durch Kohle-bzw. Rückstandsvergasung oder durch partielle Oxidation von Kohlenwasserstoffen gewonnen werden und neben Wasserdampf und den Schwefelverbindungen mindestens eine der Komponenten Stickstoff, Methan, Kohlenmonoxid, Kohlendioxid oder Wasserstoff enthalten.

4. Geformter Katalysator für die Durchführung des Verfahrens nach Anspruch 1 bis 3, bestehend aus Aluminiumoxid, mit einem Gehalt von 1 bis 90 Gew.%, vorzugsweise 6 bis 80 Gew.% Titandioxid, bezogen auf die Katalysatorgesamtmasse.

5. Geformter Katalysator nach Anspruch 4, dadurch gekennzeichnet, daß das Aluminiumoxid hauptsächlich aus $\gamma$-Aluminiumoxid und Titandioxid hauptsächlich aus Anatas besteht.

6. Geformter Katalysator nach Anspruch 4 und 5, dadurch gekennzeichnet, daß der Katalysator bis zu 1 Gew.% Phosphor, vorzugsweise zwischen 0,01 bis 0,3 Gew.%, bezogen auf den Anteil an Titandioxid, enthält.

7. Geformter Katalysator nach Anspruch 4 bis 6, dadurch gekennzeichnet, daß der Katalysator Alkalimetallionen, z.B. Natrium bis zu 5 Gew.%, vorzugsweise bis zu 1,5 Gew.%, bezogen auf den fertigen Katalysator, enthält.

8. Geformter Katalysator nach Anspruch 4 bis 7, dadurch gekennzeichnet , daß der Katalysator Ringform mit einem Außendurchmesser von 4 bis 20 mm, einer Höhe von 3 bis 20 mm und einer Wandstärke von mindestens 1 mm hat.

9. Geformter Katalysator nach Anspruch 7 bis 8, dadurch gekennzeichnet, daß der Katalysator aus Ringen besteht, die drei oder mehr Zwischenwände (Trennwände) enthalten, wobei die Trennwände in diametralen, zueinander senkrechten Ebenen angeordnet sind und zwischeneinander etwa gleiche Winkel bilden.

10. Geformter Katalysator nach Anspruch 4 bis 9, dadurch gekennzeichnet, daß der Katalysator Wabenform besitzt.